# FASCICULE DE BREVET EUROPEEN

(11) **EP 3 909 860 B1**
(45) Date de publication et mention de la délivrance du brevet: **06.07.2022**
(21) Numéro de dépôt: 21165261.5
(22) Date de dépôt: 26.03.2021
(51) Int. Cl.: B64D 37/32, F02C 9/26, B64D 31/00, G05B 9/02, F02C 7/22, B64D 31/14, F01D 19/00, F02C 7/232

(54) **SYSTEME DE CONFIRMATION DE COUPURE D'UN MOTEUR D'AERONEF**
SYSTEM ZUR BESTÄTIGUNG DES ABSCHALTENS EINES LUFTFAHRZEUGMOTORS
SYSTEM FOR CONFIRMING CUT-OFF OF AN AIRCRAFT ENGINE

(30) Priorité: 12.05.2020 FR 2004651
(43) Date de publication de la demande: 17.11.2021
(73) Titulaire: AIRBUS OPERATIONS (S.A.S.), 31060 Toulouse (FR)
(72) Inventeur: ZACCARIA, Patrick, 31060 TOULOUSE Cedex 9 (FR); BOYER, David, 31060 TOULOUSE Cedex 9 (FR)
(74) Mandataire: Sarraméa, Claude

(56) Documents cités:
- EP-A2- 2 258 927
- US-A1- 2005 109 038
- US-B2- 10 208 620

## Description

### DOMAINE TECHNIQUE

Le domaine de la présente invention est la confirmation de coupure d'un moteur d'un aéronef, ainsi qu'un procédé implémenté par un tel système.

### ETAT DE LA TECHNIQUE ANTERIEURE

Dans de nombreux aéronefs, les pilotes peuvent ordonner la coupure d'un moteur destiné à la propulsion de l'aéronef en actionnant un organe de commande dédié dans le cockpit. Par exemple, cet organe de commande de coupure moteur est intégré à un levier principal (« master lever » en anglais) destiné au contrôle moteur. Lorsqu'il est actionné, cet organe de commande de coupure moteur déclenche un ensemble d'interrupteurs, au moins un interrupteur est actionné pour alimenter électriquement un organe de coupure d'alimentation en carburant du moteur, comme par exemple une électrovanne de coupure de carburant, et plusieurs autres interrupteurs sont actionnés pour informer d'autres organes de l'aéronef, tels que des calculateurs de système FADEC (« Full Authority Digital Engine Control » en anglais), de la coupure du moteur. De cette manière, l'alimentation en carburant du moteur est coupée, et l'ensemble des organes de l'aéronef impliqués dans la gestion de propulsion sont correctement informés de la coupure du moteur.

Bien que ce mécanisme de déclenchement de coupure d'un moteur d'aéronef soit éprouvé, il reste souhaitable d'augmenter les mécanismes de sécurité dans le domaine de l'aéronautique et confirmer que l'actionnement d'une commande de coupure d'un moteur, notamment en vol, correspond effectivement à l'intention du pilote.

Le document US 2005/109038 A1 divulgue un dispositif d'arrêt de moteur pour commander une vanne d'arrêt de carburant afin d'interrompre de manière sélective l'écoulement de carburant vers un moteur. Le dispositif comprend un interrupteur normal connecté à la vanne d'arrêt de carburant et configuré pour répondre à au moins un signal d'arrêt normal et un signal d'arrêt d'urgence. Le document EP 2 258 927 A2 divulgue également un système d'arrêt du moteur.

### EXPOSE DE L'INVENTION

A cet effet, il est proposé un système de contrôle pour contrôler une coupure moteur d'un moteur de propulsion d'aéronef, comportant : au moins un organe de coupure d'alimentation en carburant, tel que lorsque l'organe de coupure d'alimentation en carburant est électriquement alimenté, l'alimentation en carburant du moteur de propulsion est stoppée ; un organe de commande, qui est destiné à être placé dans le cockpit de l'aéronef et qui comporte un ensemble d'interrupteurs, à savoir au moins un premier interrupteur sur un lien d'alimentation électrique du ou des organes de coupure d'alimentation en carburant et une pluralité de seconds interrupteurs destinés à être connectés à une avionique de l'aéronef, le ou les premiers interrupteurs étant par défaut en position ouverte, l'ensemble d'interrupteurs basculant de position sur commande de coupure moteur. Le système de contrôle comporte en outre une unité de confirmation de coupure moteur comportant au moins un troisième interrupteur placé sur le lien d'alimentation électrique, le ou les troisièmes interrupteurs étant par défaut en position ouverte. De plus, l'unité de confirmation de coupure moteur comporte de la circuiterie électronique configurée pour faire basculer le ou les troisièmes interrupteurs en position fermée lorsqu'une quantité prédéfinie Q d'interrupteurs parmi l'ensemble d'interrupteurs de l'organe de commande bascule de position dans une fenêtre glissante de temps de durée prédéfinie et, autrement, maintient le ou les troisièmes interrupteurs en position ouverte. Ainsi, il est assuré que la coupure moteur correspond à l'intention du pilote.

Selon un mode de réalisation particulier, la circuiterie électronique est en outre configurée pour : se mettre en attente pendant une durée prédéfinie représentative d'une inertie de temps de réaction du moteur de propulsion à la coupure moteur ; vérifier si le moteur de propulsion est en logique d'arrêt, et si tel est le cas, la circuiterie électronique maintient le ou les troisièmes interrupteurs en position fermée, et sinon, la circuiterie électronique rebascule le ou les troisièmes interrupteurs en position ouverte.

Selon un mode de réalisation particulier, la circuiterie électronique détermine que le moteur de propulsion est en logique d'arrêt lorsque des capteurs confirment que la configuration des organes de coupure d'alimentation en carburant est en état d'arrêt d'alimentation en carburant.

Selon un mode de réalisation particulier, la circuiterie électronique détermine que le moteur de propulsion est en logique d'arrêt lorsque des capteurs confirment qu'un régime du moteur de propulsion est en chute.

Selon un mode de réalisation particulier, l'unité de confirmation de coupure moteur est en outre placée en sortie des seconds interrupteurs, intercalée entre l'organe de commande et l'avionique de l'aéronef.

Selon un mode de réalisation particulier, le ou les troisièmes interrupteurs sont des relais électromagnétiques.

Il est également proposé un aéronef comportant, au moins, un moteur de propulsion et un système de contrôle tel que précédemment évoqué.

Selon un mode de réalisation particulier, la circuiterie électronique est configurée pour maintenir le ou les troisièmes interrupteurs en position fermée et pour ne pas surveiller le basculement dudit ensemble d'interrupteurs de l'organe de commande lorsque la vitesse de l'aéronef est inférieure à un seuil prédéfini de vitesse.

Selon un mode de réalisation particulier, la circuiterie électronique est configurée pour maintenir le ou les troisièmes interrupteurs en position fermée et pour ne pas surveiller le basculement dudit ensemble d'interrupteurs de l'organe de commande en phase de décollage de l'aéronef.

Selon un mode de réalisation particulier, l'organe de coupure d'alimentation en carburant est une électrovanne de coupure haute pression et/ou une électrovanne de coupure basse pression.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la figure 1 illustre schématiquement, en vue de dessus, un aéronef équipé d'un système de contrôle moteur pour chaque moteur de propulsion dudit aéronef ;
la figure 2 illustre schématiquement un ensemble d'interrupteurs d'un organe de commande du système de contrôle moteur ;
la figure 3A illustre schématiquement un premier agencement d'une unité de confirmation de coupure moteur dans le système de contrôle moteur ;
la figure 3B illustre schématiquement un second agencement d'une unité de confirmation de coupure moteur dans le système de contrôle moteur ;
la figure 4 illustre schématiquement un exemple d'agencement matériel de l'unité de confirmation de coupure moteur ;
la figure 5 illustre schématiquement un algorithme d'activation sélective d'une surveillance de l'ensemble des interrupteurs, implémenté par l'unité de confirmation de coupure moteur ; et
la figure 6 illustre schématiquement un algorithme de confirmation de commande de coupure moteur, implémenté par l'unité de confirmation de coupure moteur.

### EXPOSE DETAILLE DE MODES DE REALISATION

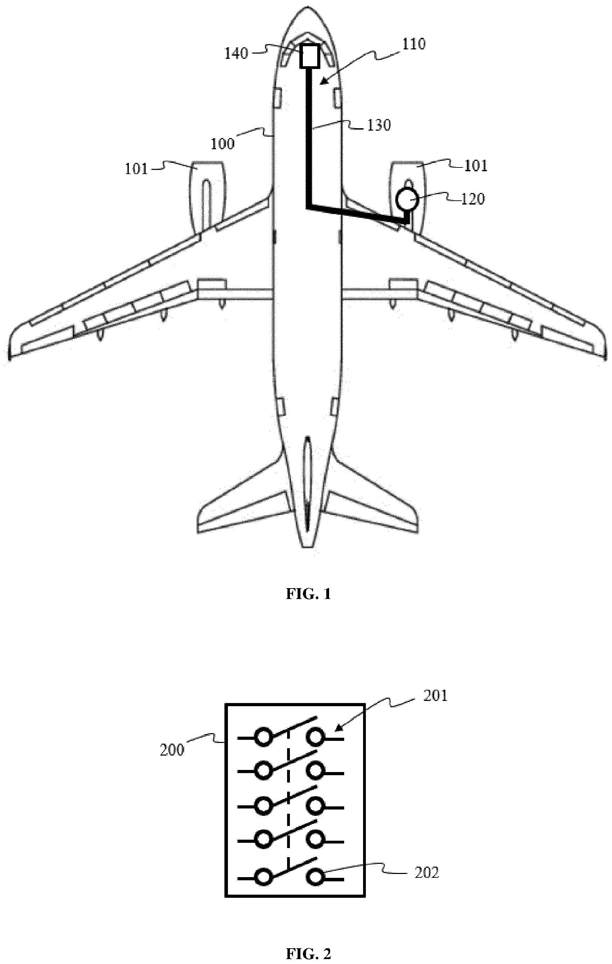

La **Fig. 1** illustre schématiquement, en vue de dessus, un aéronef 100. L'aéronef 100 comporte au moins un moteur de propulsion 101, comme par exemple un turboréacteur monté sous chaque aile de l'aéronef 100. L'aéronef 100 comporte un cockpit dans lequel au moins un pilote est destiné à s'installer pour manoeuvrer l'aéronef 100. Le cockpit comporte ainsi des équipements 140, notamment des organes de commande et des instruments de bord, permettant de manoeuvrer l'aéronef 100. L'aéronef 100 comporte aussi une avionique permettant d'assurer le bon fonctionnement de l'aéronef 100 et de fournir de l'assistance au pilotage, notamment des calculateurs de systèmes FADEC. Un système FADEC est un système de régulation numérique qui interface le cockpit avec un moteur de propulsion 101 dans la gestion des paramètres moteurs (gestion de la poussée, etc.) et dans la transmission des informations de capteurs du moteur de propulsion 101 aux instruments de bord.

L'aéronef 100 comporte ainsi, pour chaque moteur de propulsion 101, un système de contrôle moteur 110 comportant un organe de commande 200, dans le cockpit, qui est destiné à permettre à un pilote de l'aéronef 100 d'ordonner la coupure du moteur de propulsion 101. Le système de contrôle moteur 110 comporte en outre au moins un organe de coupure d'alimentation en carburant 120 connecté à l'organe de commande 200. Lorsque l'organe de coupure d'alimentation en carburant 120 est électriquement alimenté, l'alimentation en carburant du moteur de propulsion 101 est stoppée, ce qui entraîne la coupure moteur.

L'organe de coupure d'alimentation en carburant 120 est alimenté électriquement par un lien d'alimentation électrique 130 sur lequel est placé l'organe de commande 200 (i.e., l'alimentation électrique passe par l'organe de commande 200). Le lien d'alimentation électrique 130 peut être composé de plusieurs câbles électriques parallèles pour alimenter électriquement, indépendamment, plusieurs organes de coupure d'alimentation en carburant 120.

L'organe de commande 200 est par exemple un levier principal moteur EML (« Engine Master Lever » en anglais) ou intégré à celui-ci.

L'organe de coupure d'alimentation en carburant 120 est préférentiellement installé à proximité du moteur de propulsion 101 et est typiquement une électrovanne de coupure haute pression HPSOV (« High Pressure Shut-Off Valve » en anglais). L'organe de coupure d'alimentation en carburant 120 peut aussi être une électrovanne de coupure basse pression LPSOV (« Low Pressure Shut-Off Valve » en anglais), située en amont de l'électrovanne de coupure haute pression HPSOV dans le circuit d'alimentation en carburant du moteur de propulsion 101.

Comme schématiquement représenté sur la Fig. 2, l'organe de commande 200 comporte un ensemble d'interrupteurs 201. Au moins un interrupteur 202 parmi l'ensemble d'interrupteurs 201 est sur le lien d'alimentation électrique 130 (i.e., l'alimentation électrique passe par le ou les interrupteurs 202). Par défaut, le ou les interrupteurs 202 sont en position ouverte (i.e., pas d'alimentation électrique via le lien d'alimentation électrique 130). L'ensemble d'interrupteurs 201 comporte plusieurs autres interrupteurs connectés à d'autres organes de l'aéronef, par exemple à un système FADEC et à un réseau de communication avionique de type Ethernet commuté AFDX (« Avionics Full DupleX » en anglais). Par exemple, l'ensemble d'interrupteurs 201 comporte plusieurs autres interrupteurs connectés à une avionique de l'aéronef, et notamment situés sur une ligne électrique connectant l'organe de commande 200 et l'avionique. Lorsque le pilote actionne l'organe de commande 200 pour ordonner une coupure moteur, les interrupteurs de l'ensemble d'interrupteurs 201 basculent de position. Notamment, le ou les interrupteurs 202 passe en position fermée pour alimenter électriquement le ou les organes de coupure d'alimentation en carburant 120, entraînant ainsi la coupure moteur. De plus, le basculement de position des autres interrupteurs informe l'avionique de la coupure moteur.

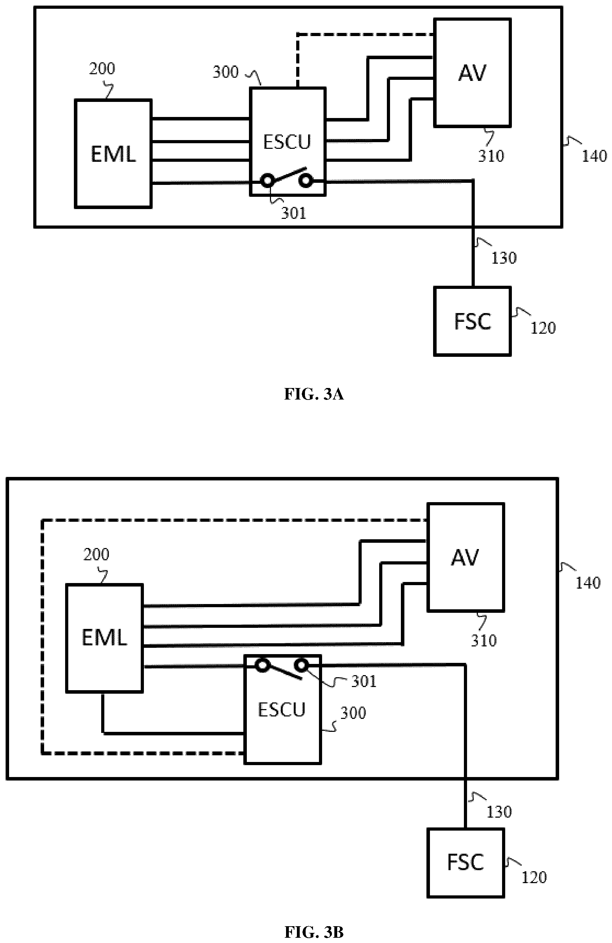

Comme schématiquement illustré sur les **Figs. 3A** et **3B****,** le système de contrôle moteur 110 comporte en outre une unité de confirmation de coupure moteur ESCU (« Engine Shutdown Confirmation Unit » en anglais) 300. L'unité de confirmation de coupure moteur ESCU 300 est placé entre l'organe de commande 200, plus particulièrement le ou les interrupteurs 202, et le ou les organes de coupure d'alimentation en carburant 120 sur le lien d'alimentation électrique 130. L'unité de confirmation de coupure moteur ESCU 300 comporte au moins un interrupteur 301, par exemple sous la forme d'un relai électromécanique, sur le lien d'alimentation électrique 130 (i.e., l'alimentation électrique passe par le ou les interrupteurs 301). Par défaut, le ou les interrupteurs 301 sont en position ouverte (i.e., pas d'alimentation électrique sur le lien d'alimentation électrique 130).

L'unité de confirmation de coupure moteur ESCU 300 effectue une surveillance de l'ensemble de interrupteurs 201. Plus particulièrement, l'unité de confirmation de coupure moteur ESCU 300 surveille le basculement de position de l'ensemble des interrupteurs 201. Lorsqu'au moins une quantité prédéfinie Q d'interrupteurs parmi l'ensemble d'interrupteurs 201 bascule de position dans une fenêtre glissante de temps TF (« Sliding TimeFrame » en anglais) de durée prédéfinie T (par exemple, 1 seconde), l'unité de confirmation de coupure moteur ESCU 300 bascule le ou les interrupteurs 301 en position fermée et autorise ainsi l'alimentation électrique via le lien d'alimentation électrique 130 ; autrement, l'unité de confirmation de coupure moteur ESCU 300 laisse le ou les interrupteurs 301 en position ouverte et n'autorise ainsi pas l'alimentation électrique via le lien d'alimentation électrique 130, quelle que soit la position (ouverte ou fermée) du ou des interrupteurs 202.

La quantité Q et la durée T de la fenêtre glissante de temps STF sont définies pour être représentatives d'un actionnement mécanique par le pilote de l'organe de commande 200. Sont ainsi écartés les déclenchements de l'ensemble des interrupteurs qui ne correspondraient pas à l'intention du pilote.

Pour surveiller le basculement de position de l'ensemble des interrupteurs 201, l'unité de confirmation de coupure moteur ESCU 300 peut être placée en sortie de l'ensemble d'interrupteurs 201, comme schématiquement illustré sur la Fig. 3A. L'unité de confirmation de coupure moteur ESCU 300 est alors intercalée entre l'organe de commande 200 et l'avionique AV 310.

En variante, comme schématiquement illustré sur la Fig. 3B, l'unité de confirmation de coupure moteur ESCU 300 reçoit de l'organe de commande 200, grâce à une unité de surveillance interne de l'organe de commande 200, une information d'état de l'ensemble d'interrupteurs 201.

L'unité de confirmation de coupure moteur ESCU 300 peut aussi être intégrée à l'avionique AV 310.

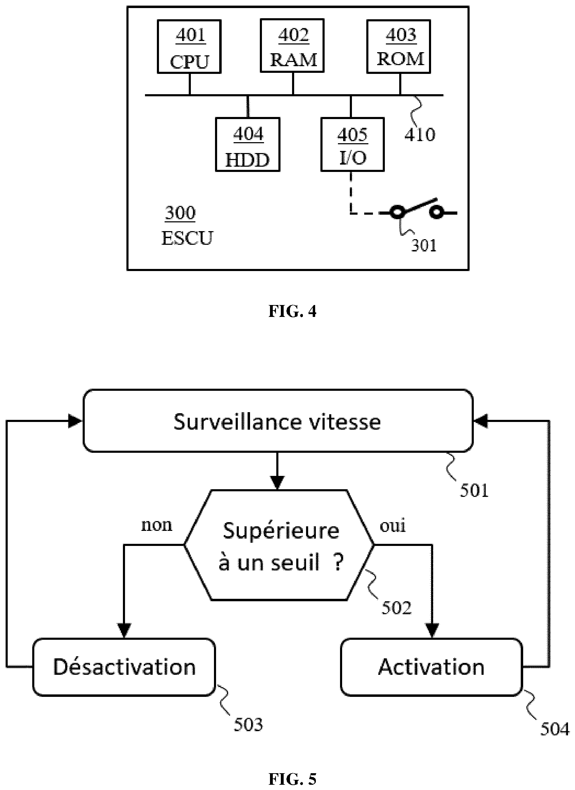

La **Fig.** 4 illustre schématiquement un agencement matériel de l'unité de confirmation de coupure moteur ESCU 300, qui comporte alors, reliés par un bus de communication 410 : un processeur ou CPU (« Central Processing Unit » en anglais) ou microcontrôleur 401 ; une mémoire vive RAM (« Random Access Memory » en anglais) 402 ; une mémoire morte ROM (« Read Only Memory » en anglais) 403, par exemple de type EEPROM (« Electrically-Erasable Programmable ROM » en anglais) ou Flash ; une unité de stockage 404, telle qu'un disque dur HDD (« Hard Disk Drive » en anglais), ou un lecteur de support de stockage, tel qu'un lecteur de cartes SD (« Secure Digital » en anglais) ; et un ensemble d'entrées-sorties I/O (« Inputs/Outputs » en anglais) 405. Au moins une sortie des entrées-sorties I/O 405 commande le ou les interrupteurs 301. Une pluralité d'entrées-sorties des entrées-sorties I/O 405 peuvent servir d'intermédiaires entre l'ensemble d'interrupteurs 201 et l'avionique AV 310 (voir Fig. 3A). Au moins une entrée des entrées-sorties I/O 405 peut servir à recevoir des informations d'état de l'ensemble d'interrupteurs 201 en provenance de l'unité de surveillance interne de l'organe de commande 200 (voir Fig. 3B). Au moins une entrée des entrées-sorties I/O 405 peut servir à recevoir des informations de l'avionique AV 310.

Le processeur 401 est capable d'exécuter des instructions chargées dans la mémoire vive 402 à partir de la mémoire morte 403, d'une mémoire externe, d'un support de stockage (tel qu'une carte SD), ou d'un réseau de communication. Lorsque l'unité de confirmation de coupure moteur ESCU 300 est mise sous tension, le processeur 401 est capable de lire de la mémoire vive 402 des instructions et de les exécuter. Ces instructions forment un programme d'ordinateur entraînant l'implémentation, par le processeur 401, de tout ou partie des étapes et fonctionnements décrits ici en relation avec l'unité de confirmation de coupure moteur ESCU 300.

Tout ou partie des étapes et fonctionnements décrits ici en relation avec l'unité de confirmation de coupure moteur ESCU 300 peut ainsi être implémenté sous forme logicielle par exécution d'un ensemble d'instructions par une machine programmable, par exemple un processeur de type DSP (« Digital Signal Processor » en anglais) ou un microcontrôleur, ou être implémenté sous forme matérielle par une machine ou un composant (« chip » en anglais) ou un ensemble de composants (« chipset » en anglais), par exemple un composant FPGA (« Field Programmable Gate Array » en anglais) ou ASIC (« Application Specific Integrated Circuit » en anglais). D'une manière générale, l'unité de confirmation de coupure moteur ESCU 300 comporte de la circuiterie électronique adaptée et configurée pour implémenter, sous forme logicielle et/ou matérielle, les fonctionnements et étapes décrits ici en relation avec l'unité de confirmation de coupure moteur ESCU 300.

Dans un mode de réalisation particulier, la surveillance de l'ensemble des interrupteurs 201 par l'unité de confirmation de coupure moteur ESCU 300 est activée de manière sélective. Cette approche est schématiquement illustrée sur la Fig. 5.

Dans une étape 501, l'unité de confirmation de coupure moteur ESCU 300 surveille la vitesse de l'aéronef 100. L'unité de confirmation de coupure moteur ESCU 300 en est par exemple informée par l'avionique AV 310 (traits pointillés sur les Figs. 3A et 3B).

Dans une étape 502, l'unité de confirmation de coupure moteur ESCU 300 compare la vitesse de l'aéronef 100 par rapport à un seuil prédéfini de vitesse TH, par exemple égal à 80 noeuds (« knots » en anglais), soit près de 150 km/h. Si la vitesse de l'aéronef 100 est supérieure au seuil prédéfini de vitesse TH, une étape 504 est effectuée ; sinon, une étape 503 est effectuée.

Dans l'étape 503, l'unité de confirmation de coupure moteur ESCU 300 désactive (si tel n'est pas déjà le cas) la surveillance de l'ensemble des interrupteurs 201. Le ou les interrupteurs 301 sont alors en position fermée. La décision d'alimenter électriquement ou pas le ou les organes de coupure d'alimentation en carburant 120 est donc laissée à l'organe de commande 200. Puis, l'étape 501 est répétée.

Dans l'étape 504, l'unité de confirmation de coupure moteur ESCU 300 active (si tel n'est pas déjà le cas) la surveillance de l'ensemble des interrupteurs 201 et se met donc en configuration de devoir confirmer les ordres de coupure moteur en provenance de l'organe de commande 200. Le ou les interrupteurs 301 sont alors par défaut en position ouverte. Le ou les interrupteurs 301 basculent en position fermée lorsque l'unité de confirmation de coupure moteur ESCU 300 confirme une commande de coupure moteur. La décision d'alimenter électriquement ou pas le ou les organes de coupure d'alimentation en carburant 120 doit donc être confirmée par l'unité de confirmation de coupure moteur ESCU 300. Puis, l'étape 501 est répétée.

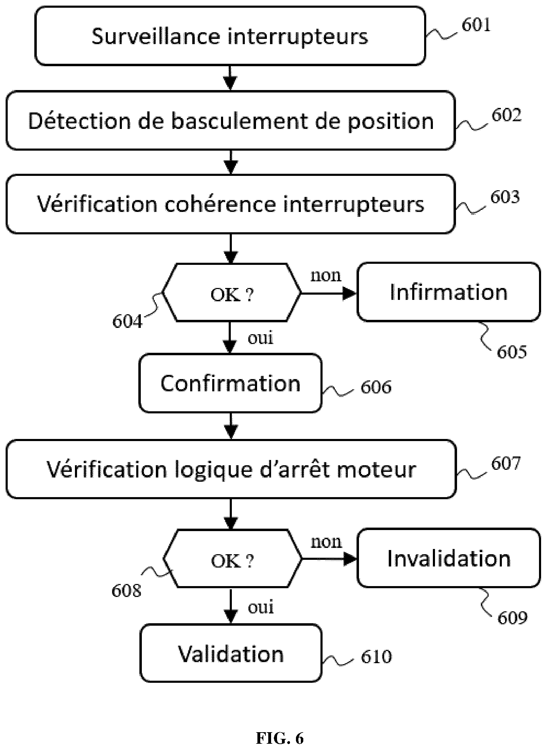

La **Fig.** 6 illustre schématiquement un algorithme de confirmation de commande de coupure moteur, implémenté par l'unité de confirmation de coupure moteur ESCU 300. Au lancement de l'algorithme de la Fig. 6, le ou les interrupteurs 301 sont en position ouverte.

Dans une étape 601, l'unité de confirmation de coupure moteur ESCU 300 effectue la surveillance de l'ensemble des interrupteurs 201.

Dans une étape 602, l'unité de confirmation de coupure moteur ESCU 300 détecte le basculement de position d'au moins un interrupteur parmi l'ensemble d'interrupteurs 201 de l'organe de commande 200.

Dans une étape 603, l'unité de confirmation de coupure moteur ESCU 300 vérifie la cohérence de position des interrupteurs de l'ensemble d'interrupteurs 201. En d'autres termes, l'unité de confirmation de coupure moteur ESCU 300 compare la quantité d'interrupteurs, parmi l'ensemble d'interrupteurs 201, qui ont basculé de position dans la fenêtre glissante de temps STF de durée T avec la quantité prédéfinie Q.

Dans une étape 604, l'unité de confirmation de coupure moteur ESCU 300 vérifie si la quantité d'interrupteurs qui ont basculé de position dans la fenêtre glissante de temps STF est supérieure ou égale à la quantité prédéfinie Q. Si tel est le cas, une étape 606 est effectuée ; sinon, une étape 605 est effectuée.

Dans l'étape 605, l'unité de confirmation de coupure moteur ESCU 300 infirme que le basculement d'interrupteurs correspond à une commande de coupure moteur intentionnelle du pilote. L'unité de confirmation de coupure moteur ESCU 300 maintient le ou les interrupteurs 301 en position ouverte.

Dans l'étape 606, l'unité de confirmation de coupure moteur ESCU 300 confirme la commande de coupure moteur et bascule le ou les interrupteurs 301 en position fermée. L'alimentation électrique du ou des organes de coupure d'alimentation en carburant 120 dépend donc de la position du ou des interrupteurs 202 parmi l'ensemble d'interrupteurs 201.

Préférentiellement, dans une étape 607, l'unité de confirmation de coupure moteur ESCU 300 se met en attente pendant une durée prédéfinie représentative d'une inertie de réaction du moteur de propulsion 101 à une coupure moteur (par exemple quelques secondes), puis vérifie si le moteur de propulsion 101 est dans une logique d'arrêt. Selon un premier mode de réalisation, l'unité de confirmation de coupure moteur ESCU 300 vérifie quel est l'état du ou des organes de coupure d'alimentation en carburant 120. La configuration des organes de coupure d'alimentation en carburant 120 doit être en état d'arrêt d'alimentation en carburant. Des capteurs, connectés à l'avionique AV 310, peuvent être utilisés pour repérer quel est l'état du ou des organes de coupure d'alimentation en carburant 120, et l'avionique AV 310 en informe l'unité de confirmation de coupure moteur ESCU 300. Selon un second mode de réalisation, l'unité de confirmation de coupure moteur ESCU 300 vérifie qu'un régime (régime N2 ou N3 par exemple) du moteur de propulsion 101 est en chute (avec une pente négative supérieure à un seuil prédéfini représentatif d'une coupure moteur). Selon un troisième mode de réalisation, l'unité de confirmation de coupure moteur ESCU 300 vérifie qu'un courant d'alimentation passe effectivement par le lien d'alimentation 130.

Alors, dans une étape 608, l'unité de confirmation de coupure moteur ESCU 300 vérifie si les conditions de logique d'arrêt moteur sont remplies. Si tel est le cas, une étape 610 est effectuée ; sinon, une étape 609 est effectuée.

Dans l'étape 609, l'unité de confirmation de coupure moteur ESCU 300 détecte une situation de faux contact suspecté au niveau de l'organe de commande 200, invalide la commande de coupure moteur et bascule le ou les interrupteurs 301 en position ouverte. L'unité de confirmation de coupure moteur ESCU 300 interdit l'alimentation électrique du ou des organes de coupure d'alimentation en carburant 120 par l'organe de commande 200 au moins jusqu'à la fin du vol ou jusqu'à une immobilisation de l'aéronef 100 ou jusqu'à réalisation d'une opération de maintenance sur l'organe de commande 200, l'unité de confirmation de coupure moteur ESCU 300 en étant informée par l'avionique AV 310.

Dans l'étape 610, l'unité de confirmation de coupure moteur ESCU 300 valide la commande de coupure moteur et maintient le ou les interrupteurs 301 en position fermée.

L'algorithme de la Fig. 6 peut être réinitialisé lorsqu'une quantité Q' d'interrupteurs parmi l'ensemble d'interrupteurs 201 sont détectés comme étant dans leur position par défaut. Il est aussi possible de réinitialiser l'algorithme de la Fig. 6 lorsque, suite à une coupure moteur, l'avionique AV 310 informe l'unité de confirmation de coupure moteur ESCU 300 qu'un redémarrage moteur a eu lieu.

A noter que l'unité de confirmation de coupure moteur ESCU 300 telle que décrite ci-dessus est indépendante de toute architecture de protection contre le feu dans le moteur de propulsion 101. Le pilote peut ainsi ordonner, en, cas de feu moteur, le déclenchement de l'électrovanne de coupure basse pression LPSOV sans empêchement de la part de l'unité de confirmation de coupure moteur ESCU 300.

De plus, dans un mode de réalisation particulier, l'unité de confirmation de coupure moteur ESCU 300 peut forcer le ou les interrupteurs 301 en position ouverte pendant certaines manoeuvres de l'aéronef 100. Notamment, l'unité de confirmation de coupure moteur ESCU 300 peut être informée par l'avionique AV 310 que l'aéronef 100 est en phase de décollage et forcer le ou les interrupteurs 301 en position ouverte tant que la phase de décollage est en cours. Cela interdit la coupure moteur par l'organe de commande 200 pendant la phase de décollage.

## Revendications

1. Système de contrôle (110) pour contrôler une coupure moteur d'un moteur de propulsion (101) d'aéronef (100), comportant :
- au moins un organe de coupure d'alimentation en carburant (120), tel que lorsque l'organe de coupure d'alimentation en carburant (120) est électriquement alimenté, l'alimentation en carburant du moteur de propulsion (101) est stoppée ;
- un organe de commande (200), qui est destiné à être placé dans le cockpit de l'aéronef (100) et qui comporte un ensemble d'interrupteurs (201), au moins un premier interrupteur (202) sur un lien d'alimentation électrique (130) du ou des organes de coupure d'alimentation en carburant (120) et une pluralité de seconds interrupteurs destinés à être connectés à une avionique (310) de l'aéronef (100), le ou les premiers interrupteurs (202) étant par défaut en position ouverte, l'ensemble d'interrupteurs (201) basculant de position sur commande de coupure moteur ;
- une unité de confirmation de coupure moteur (300) comportant au moins un troisième interrupteur (301) placé sur le lien d'alimentation électrique (130), le ou les troisièmes interrupteurs (301) étant par défaut en position ouverte ;
**caractérisé en ce que**
l'unité de confirmation de coupure moteur (300) comporte de la circuiterie électronique configurée pour faire basculer le ou les troisièmes interrupteurs (301) en position fermée lorsqu'une quantité prédéfinie Q d'interrupteurs parmi l'ensemble d'interrupteurs (201) de l'organe de commande (200) bascule de position dans une fenêtre glissante de temps de durée prédéfinie et, autrement, maintient le ou les troisièmes interrupteurs (301) en position ouverte.

2. Système de contrôle (110) selon la revendication 1, dans lequel la circuiterie électronique est en outre configurée pour :
- se mettre en attente pendant une durée prédéfinie représentative d'une inertie de temps de réaction du moteur de propulsion (101) à la coupure moteur ;
- vérifier si le moteur de propulsion (101) est en logique d'arrêt, et si tel est le cas, la circuiterie électronique maintient le ou les troisièmes interrupteurs (301) en position fermée, et sinon, la circuiterie électronique rebascule le ou les troisièmes interrupteurs (301) en position ouverte.

3. Système de contrôle (110) selon la revendication 2, dans lequel la circuiterie électronique détermine que le moteur de propulsion (101) est en logique d'arrêt lorsque des capteurs confirment que la configuration des organes de coupure d'alimentation en carburant (120) est en état d'arrêt d'alimentation en carburant.

4. Système de contrôle (110) selon la revendication 2, dans lequel la circuiterie électronique détermine que le moteur de propulsion (101) est en logique d'arrêt lorsque des capteurs confirment qu'un régime du moteur de propulsion (101) est en chute.

5. Système de contrôle (110) selon l'une quelconque des revendications 1 à 4, dans lequel l'unité de confirmation de coupure moteur (300) est en outre placée en sortie des seconds interrupteurs, intercalée entre l'organe de commande (200) et l'avionique (310) de l'aéronef (100).

6. Système de contrôle (110) selon l'une quelconque des revendications 1 à 5, dans lequel le ou les troisièmes interrupteurs (301) sont des relais électromagnétiques.

7. Aéronef (100) comportant, au moins, un moteur de propulsion (101) et un système de contrôle (110) selon l'une quelconque des revendications 1 à 6.

8. Aéronef (100) selon la revendication 7, dans lequel la circuiterie électronique est configurée pour maintenir le ou les troisièmes interrupteurs (301) en position fermée et pour ne pas surveiller le basculement dudit ensemble d'interrupteurs (201) de l'organe de commande (200) lorsque la vitesse de l'aéronef (100) est inférieure à un seuil prédéfini de vitesse.

9. Aéronef (100) selon l'une quelconque des revendications 7 ou 8, dans lequel la circuiterie électronique est configurée pour maintenir le ou les troisièmes interrupteurs (301) en position fermée et pour ne pas surveiller le basculement dudit ensemble d'interrupteurs (201) de l'organe de commande (200) en phase de décollage de l'aéronef (100).

10. Aéronef (100) selon l'une quelconque des revendications 7 à 9, dans lequel l'organe de coupure d'alimentation en carburant (120) est une électrovanne de coupure haute pression et/ou une électrovanne de coupure basse pression.

## Patentansprüche

1. Steuersystem (110) zum Steuern einer Motorabschaltung eines Antriebsmotors (101) eines Luftfahrzeugs (100), das Folgendes umfasst:
- mindestens ein Organ zur Abschaltung der Kraftstoffversorgung (120), sodass, wenn das Organ zur Abschaltung der Kraftstoffversorgung (120) mit Strom versorgt wird, die Kraftstoffversorgung des Antriebsmotors (101) gestoppt wird;
- ein Bedienorgan (200), das dazu bestimmt ist, in dem Cockpit des Luftfahrzeugs (100) angeordnet zu sein, und das einen Satz Schalter (201) umfasst, mindestens einen ersten Schalter (202) in einer Stromversorgungsverbindung (130) des oder der Organe zur Abschaltung der Kraftstoffversorgung (120) und eine Vielzahl von zweiten Schaltern, die dazu bestimmt sind, mit einer Avionik (310) des Luftfahrzeugs (100) verbunden zu sein, wobei sich der oder die ersten Schalter (202) standardmäßig in der offenen Stellung befinden, wobei der Satz Schalter (201) bei einem Befehl zur Motorabschaltung umschaltet;
- eine Einheit zur Bestätigung der Motorabschaltung (300), die mindestens einen dritten Schalter (301) umfasst, der in der Stromversorgungsverbindung (130) angeordnet ist, wobei sich der oder die dritten Schalter (301) standardmäßig in der offenen Stellung befinden;
**dadurch gekennzeichnet, dass**
die Einheit zur Bestätigung der Motorabschaltung (300) eine elektronische Schaltung umfasst, die dazu konfiguriert ist, den oder die dritten Schalter (301) in die geschlossene Stellung umzuschalten, wenn eine vordefinierte Menge Q von Schaltern innerhalb des Satzes Schalter (201) des Bedienorgans (200) innerhalb eines gleitenden Fensters von vordefinierter Dauer umschaltet, und andernfalls den oder die dritten Schalter (301) in der offenen Stellung hält.

2. Steuersystem (110) nach Anspruch 1, wobei die elektronische Schaltung ferner zu Folgendem konfiguriert ist:
- Eintreten, für eine vordefinierte Dauer, die für eine Trägheit der Reaktionszeit des Antriebsmotors (101) bei Motorabschaltung repräsentativ ist, in einen Wartemodus;
- Überprüfen, ob sich der Antriebsmotor (101) in einem logischen AUS-Zustand befindet, und wobei, wenn dies der Fall ist, die elektronische Schaltung den oder die dritten Schalter (301) in der geschlossenen Stellung hält, und andernfalls die elektronische Schaltung den oder die dritten Schalter (301) zurück in die offene Stellung schaltet.

3. Steuersystem (110) nach Anspruch 2, wobei die elektronische Schaltung bestimmt, dass sich der Antriebsmotor (101) in einem logischen AUS-Zustand befindet, wenn Sensoren bestätigen, dass sich die Konfiguration der Organe zur Abschaltung der Kraftstoffversorgung (120) in einem Kraftstoffversorgungs-AUS-Zustand befindet.

4. Steuersystem (110) nach Anspruch 2, wobei die elektronische Schaltung bestimmt, dass sich der Antriebsmotor (101) in einem logischen AUS-Zustand befindet, wenn Sensoren bestätigen, dass sich eine Drehzahl des Antriebsmotors (101) verringert.

5. Steuersystem (110) nach einem der Ansprüche 1 bis 4, wobei die Einheit zur Bestätigung der Motorabschaltung (300) ferner am Ausgang der zweiten Schalter angeordnet ist, eingefügt zwischen das Bedienorgan (200) und die Avionik (310) des Luftfahrzeugs (100).

6. Steuersystem (110) nach einem der Ansprüche 1 bis 5, wobei der oder die dritten Schalter (301) elektromagnetische Relais sind.

7. Luftfahrzeug (100), das mindestens einen Antriebsmotor (101) und ein Steuersystem (110) nach einem der Ansprüche 1 bis 6 umfasst.

8. Luftfahrzeug (100) nach Anspruch 7, wobei die elektronische Schaltung dazu konfiguriert ist, den oder die dritten Schalter (301) in der geschlossenen Stellung zu halten und das Umschalten des Satzes Schalter (201) des Bedienorgans (200) nicht zu überwachen, wenn die Geschwindigkeit des Luftfahrzeugs (100) kleiner als ein vordefinierter Geschwindigkeitsschwellenwert ist.

9. Luftfahrzeug (100) nach einem der Ansprüche 7 oder 8, wobei die elektronische Schaltung dazu konfiguriert ist, den oder die dritten Schalter (301) in der geschlossenen Stellung zu halten und das Umschalten des Satzes Schalter (201) des Bedienorgans (200) nicht zu überwachen, während das Luftfahrzeug (100) abhebt.

10. Luftfahrzeug (100) nach einem der Ansprüche 7 bis 9, wobei das Organ zur Abschaltung der Kraftstoffversorgung (120) ein Hochdruckabsperrventil und/oder ein Niederdruckabsperrventil ist.

## Claims

1. Control system (110) for controlling an engine shutdown of a propulsion engine (101) of an aircraft (100), comprising:
- at least one fuel supply shut-off member (120), such that, when the fuel supply shut-off member (120) is electrically powered, the fuel supply of the propulsion engine (101) is stopped;
- a control member (200), which is intended to be placed in the cockpit of the aircraft (100) and which comprises a set of switches (201), at least one first switch (202) on an electrical power supply link (130) of the fuel supply shut-off member or members (120) and a plurality of second switches intended to be connected to avionics (310) of the aircraft (100), the first switch or switches (202) being in open position by default, the set of switches (201) switching position on an engine shutdown command;
- an engine shutdown confirmation unit (300) comprising at least one third switch (301) placed on the electrical power supply link (130), the third switch or switches (301) being in open position by default;
**characterized in that**
the engine shutdown confirmation unit (300) comprises electronic circuitry configured to switch the third switch or switches (301) over to closed position when a predefined quantity Q of switches out of the set of switches (201) of the control member (200) switches position within a sliding time frame of predefined duration and, otherwise, keeps the third switch or switches (301) in open position.

2. Control system (110) according to Claim 1, wherein the electronic circuitry is also configured to:
- be set to standby for a predefined duration representative of a reaction time inertia of the propulsion engine (101) on engine shutdown;
- check whether the propulsion engine (101) is in logical shut-off mode, and, if such is the case, the electronic circuitry keeps the third switch or switches (301) in closed position, and, otherwise, the electronic circuitry switches the third switch or switches (301) back to open position.

3. Control system (110) according to Claim 2, wherein the electronic circuitry determines that the propulsion engine (101) is in logical shut-off mode when sensors confirm that the configuration of the fuel supply shut-off members (120) is in a fuel supply shut-off state.

4. Control system (110) according to Claim 2, wherein the electronic circuitry determines that the propulsion engine (101) is in logical shut-off mode when sensors confirm that a speed of the propulsion engine (101) is dropping.

5. Control system (110) according to any one of Claims 1 to 4, wherein the engine shutdown confirmation unit (300) is also placed at the output of the second switches, inserted between the control member (200) and the avionics (310) of the aircraft (100).

6. Control system (110) according to any one of Claims 1 to 5, wherein the third switch or switches (301) are electromagnetic relays.

7. Aircraft (100) comprising, at least, a propulsion engine (101) and a control system (110) according to any one of Claims 1 to 6.

8. Aircraft (100) according to Claim 7, wherein the electronic circuitry is configured to keep the third switch or switches (301) in closed position and to not monitor the switching-over of said set of switches (201) of the control member (200) when the speed of the aircraft (100) is below a predefined speed threshold.

9. Aircraft (100) according to either one of Claims 7 and 8, wherein the electronic circuitry is configured to keep the third switch or switches (301) in closed position and to not monitor the switching-over of said set of switches (201) of the control member (200) in the take-off phase of the aircraft (100).

10. Aircraft (100) according to any one of Claims 7 to 9, wherein the fuel supply shut-off member (120) is a high-pressure shut-off solenoid valve and/or a lowpressure shut-off solenoid valve.
